# EUROPÄISCHE PATENTANMELDUNG

(11) **EP 1 468 768 A2**
(43) Veröffentlichungstag der Anmeldung: **20.10.2004**
(21) Anmeldenummer: 04008255.4
(22) Anmeldetag: 05.04.2004
(51) Int. Cl.: B23B 51/02

(54) **Hochgeschwindigkeits-Zerspanungsverfahren**

(30) Priorität: 16.04.2003 DE 10317567
(71) Anmelder: GÜHRING, Jörg, Dr., 72458 Albstadt (DE)
(72) Erfinder: Gsänger, Dieter, 72488 Sigmaringen (DE); Kleiner, Gilbert, 72488 Sigmaringen (DE)
(74) Vertreter: Winter, Brandl, Fürniss, Hübner, Röss, Kaiser, Polte, Partnerschaft

(57) **Zusammenfassung**

Es wird ein Hochgeschwindigkeitsbearbeitungs (HSC)-Zerspanungsverfahren vorgeschlagen, wobei bei Mindermengenschmierung (MMS) unter HSC-Bedingungen mit einem innengekühlten (7, 8, 9) Vollhartmetall-Bohrer (1) ins Volle gebohrt wird. Der Vollhartmetall-Bohrer (1) hat zumindest einen Steg (2; 102) mit einer Hauptschneide (3), von der ausgehend jeweils eine Spannut (4; 104) zu einem Bohrerschaft (5) hin verläuft, die mit der Bohrungswand jeweils eine Spankammer (Q_{II}, Q_{III}; Q_{III}') definiert. Das Verfahren ist dadurch gekennzeichnet, dass der hydraulische Radius (S_{II}/Q_{II}, S_{III}/Q_{III}; S_{III}'/Q_{III}') der Spankammer (Q_{II}, Q_{III}; Q_{III}') in einer auf die Bohrerlängsachse (A) senkrecht stehenden Ebene von der Hauptschneide (3) aus in Richtung Bohrerschaft (5) bei konstantem Durchmesser (D_{K}) eines Bohrerkerns und unter Aufweitung der Spannut (4; 104) kontinuierlich ansteigt.

## Beschreibung

Die Erfindung betrifft ein Hochgeschwindigkeitsbearbeitungs (HSC)-Zerspanungsverfahren gemäß dem Oberbegriff des Anspruchs 1.

Bohrwerkzeuge werden zur spanenden Metallbearbeitung eingesetzt, z.B. zum Bohren von Löchern in Werkstücken aus Stahl, Guß, Stahlguß oder anderen metallischen Werkstücken. Dabei treten an den Schneidkanten Schnittkräfte auf, die mit der Vorschubgeschwindigkeit ansteigen. Die entstehenden Späne werden dabei durch die Spannuten abgeführt, die deshalb eine Tendenz haben, zu verstopfen. Bei einer derartigen Verstopfung muss der Bohrvorgang abgebrochen werden und ein Rückzug des Bohrers eingeleitet werden, um die Späne aus der Spannut zu entfernen. Insbesondere bei Bohrern geringen Durchmessers besteht dabei die Gefahr von Bruch. Man steht also vor dem Dilemma, dass zu enge Spannuten bzw. zu kleine Spankammern zu einem vorzeitigen Verstopfen führen, während zu große Spankammern entweder zu einer Schwächung des Bohrerkerns oder der Bohrerstege führen, die insbesondere im Spitzenbereich nicht hinnehmbar ist und zu kurzen Standzeiten des Bohrers führt.

Bei besonders hohen Belastungen setzt man deshalb Bohrwerkzeuge aus Vollhartmetall ein, das eine hohe Festigkeit, Verwindungssteifigkeit, Härte und Abnutzungsresistenz aufweist. Solche Hochleistungswerkzeuge werden auch den hohen Belastungen gerecht, die beispielsweise bei die Hartbearbeitung, Trockenbearbeitung, Mindermengenschmierung MMS und der Hochgeschwindigkeitsbearbeitung HSC auftreten.

Kostenvermeidung und gestiegene Umweltauflagen führten dabei zum Einsatz von Mindermengenschmierung (MMS), da hohe Kühlmittelemulsionsverbrauche nicht mehr zeitgemäß sind. Auch hat man erkannt, dass die Zielsetzungen MMS-Fähigkeit und deutlich höhere Schnittleistung nicht gegenläufig sind, sondern gleichzeitig realisiert werden können. Bohrwerkzeuge, die für den Einsatz mit MMS entwickelt wurden, laufen beispielsweise mit deutlich höheren Vorschüben als Werkzeuge für konventionelle Kühlschmierung.

Zur Verkürzung der Hauptzeiten sind die fahrbaren Vorschubgeschwindigkeit und Drehzahlen in heutigen Hochgeschwindigkeitsbearbeitungsverfahren (HSC) drastisch gestiegen.

HSC-Bedingungen im Sinne der vorliegenden Anmeldung sind dabei
Vorschubgeschwindigkeiten über 3,5 m/min, insbesondere über 4,5 m/min, beispielsweise 5 m/min, sowie
Schnittgeschwindigkeiten über 200 m/min, insbesondere über 250 m/min, beispielsweise 300 m/min.
Mindermengenschmierung (MMS) im Sinne der vorliegenden Anmeldung erfolgt bei einem
Luftdruck von 3 bar bis 7 bar, der dem normalen Druck der Hallenleitung entspricht, insbesondere 4 bar bis 6 bar (1 bar = 10⁵ Pa), sowie bei einer
Ölzumischung pro Werkzeug von 15 ml/h bis 60 ml/h, insbesondere 20 ml/h bis 50 ml/h, beispielsweise 30 ml/h bis 50 ml/h.

Größere Nutquerschnitte befördern größere Mengen an Spänen aus der Bohrung. Es wurden deshalb untersucht ob, bei gattungsgemäßen Vollhartmetall-Bohrern die Möglichkeit besteht, größere Spankammern einzubringen und dadurch die Spanförderung zu verbessern. Dabei zeigte sich, dass die auftretenden Spannungen selbst unter HPC-Schnittwerten bei konventioneller Bauform der Bohrer nicht an die tatsächlichen Belastungsgrenzwerte moderner Hartmetalle im Hinblick auf die auftretenden Spannungen heranreichen. Diese Untersuchungen führten zum Einsatz von vergrößerten Spannutquerschnitten.

Schon aus Zeiten, in denen weder MMS-Schmierung, noch High-Speed-Cutting (HSC)-Verfahren bekannt waren, sind ferner Bohrer bekannt, deren Querschnittsgeometrie sich in Abhängigkeit von der Längskoordinate ändert.

So wird in der US-Schrift US 750,537 von 1904 ein Bohrer gezeigt, bei dem sich die Querschnittsfläche der Spannut von der Bohrerspitze in Richtung zum Bohrerschaft hin vergrößert ohne dass der Bohrerkern geschwächt wird. Die Flächenvergrößerung wird dabei durch eine über eine Zwischenerhebung an die Spannut anschließende zweite Nut erreicht, die mit einem zweiten Schleifvorgang unter einem Winkel zur eigentlichen Spannut eingebracht wird und sich im Verlauf zum Bohrerende hin kontinuierlich aufweitet. Der gezeigte Bohrer hat einen Kegelmantelanschliff und keine innenliegende Kühlmittelzufuhr.

Schließlich ist aus der Japanischen Schrift JP01-281192 von 1989 ein innengekühlter Bohrer bekannt, bei dem sich die Spannut von der Bohrerspitze ausgehend zum gegenüberliegenden Bohrerende hin kontinuierlich aufweitet. Die Änderung der Breite der Spannut pro axiale Länge beträgt dabei 1% bis 6% und verfolgt den Zweck, die Reibung der Späne an den Wänden der Spannut zu vermindern.

Aufgabe der Erfindung ist es, bei einem Verfahren der gattungsbildenden Art bei ausreichenden Standzeiten die Hauptzeiten zu verbessern.

Diese Aufgabe wird durch die Merkmale des Anspruchs 1 gelöst.

Es wurde dabei erkannt, dass Vorschub- und Schnittgeschwindigkeit entscheidend von den Strömungsverhältnissen des Kühlmittels, insbesondere in der Spannut und am Austritt in die Spannut abhängt.

Versuche und Simulationen ergaben, dass beim Einsatz von Bohrern mit interner MMS-Zufuhr in HSC-Verfahren die fahrbaren Vorschub- und Schnittgeschwindigkeiten dadurch gedämpft werden, dass am Austritt des Kühlmittels in die Spannut starke Verwirbelungen existieren und die Strömung auch im weiteren Verlauf durch die Spannut durch Verwirbelungen gekennzeichnet ist und mit einer hohen Frequenz zwischen Spanfläche und Stegrücken hin- und herschwingt.

Zur Erläuterung wird schon hier bezug genommen auf Fig. 8, die eine durch numerische Simulation erhaltene Stromfadendarstellung der Strömungsverhältnisse an der Bohrerspitze bei einem unter HPC-Bedingungen eingesetzten, konventionellen Vollhartmetall-Bohrer mit Innenkühlkanal quantitativ darstellt. Deutlich zu sehen sind dabei die Wirbelbildung am Kühlkanalaustritt. Auch der weitere Verlauf der Stromfäden in der Spannut wird durch Verwirbelungen bestimmt und ist näherungsweise sinusförmig aufgrund dessen, dass die Strömung hochfrequent zwischen den Spannutwänden hin- und hergeworfen wird.

Dadurch kommt es zu einer geringen Durchsatzmenge und Strömungsgeschwindigkeit in der Spannut und damit zu einer verringerten Spanabfuhrfähigkeiten und somit zu einer Verringung der maximal fahrbaren Vorschub- und Schnittgeschwindigkeiten und letztlich zu erhöhten Bearbeitungs- und Hauptzeiten.

Zudem wurde erkannt, dass die durch Schnittkräfte bei der Zerspanung induzierten hohen Spannungen im wesentlichen lokal auf den Bereich der Bohrerspitze beschränkt sind.

Erfindungsgemäß wird jetzt ein HSC-Verfahren unter den obenstehend genannten HSC-Bedingungen und unter Einsatz von MMS mit den obenstehend genannten Parametern vorgeschlagen, wobei die Zerspanung mit einem Bohrer mit einer sich kontinuierlich aufweitenden Spannut durchgeführt wird, wie er an sich aus der JP01-281192 schon zum Einsatz bei konventionelle Bohrverfahren mit Flüssigkühlung bekannt ist, um die Reibung der Späne an den Wänden der Spannuten zu vermindern.

Versuche haben ergeben, dass mit dem erfindungsgemäßen Verfahren eine Verbesserung der Strömungsbedingungen des Kühlmittelstroms in der Spannut und somit eine verbesserte Spanabfuhr bewerkstelligt werden kann, so dass höhere Vorschub- und Schnittgeschwindigkeiten ohne Festfressen des Bohrers fahrbar werden und auf der anderen Seite keine kritische Schwächung der Bohrerstabilität in Kauf genommen werden muss, wenn der Durchmesser des Bohrerkerns konstant gehalten wird.

Im einzelnen wird ein Bohrer mit einer der Axialkoordinate folgenden, kontinuierlichen Spannutaufweitung eingesetzt. Dabei ist die Aufweitung so ausgestaltet, dass eine tatsächliche Steigerung des hydraulischen Radius bewirkt wird, d.h. das Profil der Spannut weist im wesentlichen keine Vorsprünge oder Ausnehmungen auf, die die benetzte Oberfläche unnötig vergrößern, ohne eine wesentliche Vergrößerung des Spankammervolumens zu bewirken.

Die durch Spannut und Bohrungswand gebildetete Spankammer hat somit die Form und Wirkung eines Diffusors, mit dem ein Teil der Druckverluste über die Strecke bis zum Ende der Spankammer, d.h. bis zur Oberfläche des angebohrten Werkstücks, ausgeglichen werden. Die Strömungsgeschwindigkeit steigt somit tendenziell an und das Durchsatzvolumen wird gesteigert. Aufgrund der Sogwirkung werden gleichzeitig lokale Geschwindigkeitskomponenten in Querrichtung, d.h. turbulente Strömungsanteile verringert, so dass die Strömungsverluste weiter verringert werden.

Beim Einspritzen des Schmiermittels, d.h. Luft mit feinen Öltröpfchen, wirkt dagegen die durch die geometrischen Gegebenheiten in ihrer Ausdehnung begrenzte Austrittsöffnung des Innenkühlkanals als Düse, bei der der Düsenquerschnitt sehr viel kleiner ist der Querschnitt der anschließenden (Zerstäuber-)Kammer, d.h. der Spankammer, so dass sich das eingespritzte Schmiermittel nicht nur in Austrittsrichtung ausbreitet, sondern auch im Winkel zur Austrittsrichtung einen kegelförmigen Einspritznebel bildet. Unter Winkel eingespritzte Tröpfchen prallen auf die Wände der Spankamer auf und wieder davon ab, d.h. es kommt zur Reflektion einzelner Tröpfchen, bzw. Strömungsanteile. In der Folge treffen die abgelenkte Strömungsanteile wieder auf die in Spannutrichtung eingespritzten, nicht abgelenkten Strömungsanteile, so dass Verwirbelungen entstehen. Die Aufweitung der Spannut entspricht dabei einerseits einer Vergrößerung des Strömungsanteils des Einspritzkegels, der bezogen auf eine bestimmte Länge ohne Aufprall auf die Spannutseitenwände, also auf Spanfläche und Spanfreifläche bzw. Stegrücken durch die Spannut strömt. Andererseits wird der Reflektionswinkel der auf die Spannutseitenwände aufprallenden Strömungsanteile stumpfer. Insgesamt kommt es so zu dem Effekt, dass die Strömung gleichsam in Strömungsrichtung durch die Spannut hindurchgezogen wird; Wirbelbildungen an der Austrittsöffnung werden auf diese Weise reduziert und die Strömung in der Spannut insgesamt geglättet.

Dies wird aus einer Gegenüberstellung des obenstehend erläuterten, in der Fig. 8 gezeigten Strömungsbilds bei einem konventionellen Bohrer mit stark verwirbelter Strömung und von den Spannutseitenwänden hochfrequent hin- und her geworfenen Strömungsanteilen und des in der Fig. 7 gezeigten Strömungsbilds bei einem Bohrer mit aufgeweiteter Spannut mit geringeren Verwirbelungen und einer insgesamt geglätteten Strömung deutlich, auf die deshalb auch schon hier bezug genommen wird.

Mit der erfindungsgemäß bewirkten Dämpfung der Strömungsschwingung und Wirbelreduzierung an der Austrittsöffnung konnten enorme Steigerungen des Kühlmitteldurchsatzes und damit des zu bewältigenden Spanmassestroms erzielt werden. Dagegen ergaben Versuche, dass selbst extrem hohe Schnittwerten zerstörungsfrei vom Hartmetall des Bohrers ertragen werden. Beispielsweise konnten bei Einsatz eines Bohrers mit Durchmesser 5,0 mm Schnittgeschwindigkeiten von 300 m/min, Vorschubgeschwindigkeiten von 7500 mm/min, bei Einsatz eines Bohrers mit Durchmesser 12,0 mm Schnittgeschwindigkeiten von 700 m/min und Vorschubgeschwindigkeiten von 15000 mm/min bei der Zerspanung von Sphäroguß gefahren werden. Auf diese Weise konnten kurze Eingriffszeiten pro Bohrung und damit kurze Hauptzeiten erreicht werden. Am Austritt des Kühlmittelaerosols in die Spannut wurden dabei punktuell Strömungsgeschwindigkeiten im Überschallbereich erreicht und der Volumenstrom konnte gegenüber gleichartigen Bohrern mit Spannuten konstanter Breite um 40% gesteigert werden.

Diese Bohrer waren dabei gemäß vorteilhaften Ausführungsformen der Erfindung weitergebildet, die Gegenstand der weiteren Unteransprüche sind.

Gemäß der vorteilhaften Ausführungsform des Anspruchs 2 wird für das erfindungsgemäße Verfahren ein Bohrer mit zwei Stegen und Spannuten eingesetzt. Bei speziellen Anwendungsfällen wäre jedoch auch der Einsatz von Einlippenbohrern mit einer aufgeweiteten Spannut denkbar.

Gemäß Anspruch 3 erstreckt sich dabei ein zentrischer Innenkühlkanal durch den Bohrer. Dadurch weird vermieden, dass es über die Strecke von der Bohrerbasis zur Bohrerspitze aufgrund einer Zentrifugalwirkung, die bei gewendelten Kühlkanälen auftreten würde, zu einer Entmischung des zugeführten MMS-Kühlmittels (Aerosol) kommt.

Erst nahe der Bohrerspitze verzweigt der Kühlkanal in Y-förmige Stichkanäle, so dass eine auf das dort befindliche Medium wirkende Zentrifugalkraft zu einer zusätzlichen Beschleunigung und damit zu noch höherem Durchsatz führt, d.h. zu einer Beschleunigung der Strömung nach Art eines Rasensprengers kommt. Insbesondere wenn die Stichkanäle dabei einen kleineren Querschnitt als der zentrische Längskanal durch den Bohrer haben, kommt es zudem aufgrund der düsenartigen Verengung zu einer weiteren Beschleunigung der Strömung.

Die Austrittsöffnungen liegen dabei im Bereich der Bohrerspitze, insbesondere auf der Freifläche des Bohrers oder am Übergang Freifläche-Spannut am Stegrücken, können aber auch am Stegrücken oder in der Nut liegen. Bei einem Vierflächenanschliff können die Austrittsöffnungen auch auf der zweiten Freifläche oder vorteilhaft am Übergang zweite Freifläche - Spannut liegen, um einen großen Anteil des Kühlmittels in die Spannut zu lenken. Bei einer vorteilhaft an der Bohrerspitze vorgesehenen Ausspitzung könnte eine weitere vorteilhafte Ausgestaltung darin leigen, die Austrittsöffnung zumindest teilweise in den Bereich der Querschneidenausspitzung zu legen, um auf diese Weise einen noch größeren Anteil des Aerosols in die Spannut zu leiten.

Weiterhin ist es vorteilhaft, wenn die Austrittsöffnungen am der Hauptschneide abgewandten Ende der Freifläche liegen und zur Spannut hin abgesenkt sind, so dass der Hauptanteil des Kühlmittelaerosols direkt in die Spannut gelenkt wird.

Für einen guten hydraulischen Querschnitt ist es ferner vorteilhaft, wenn das Profil der Spannut stetig gekrümmt ist. Dadurch kann ein guter hydraulischer Radius der Spannut erreicht und vermieden werden, dass - wie etwa bei S-förmigen Nutprofilen - ein Teil der Strömung bzw. des Drucks der Strömung in einem Bereich der Spannut entweicht, in dem er zum Spanabtransport nichts beiträgt.

Es ist denkbar, das erfindungsgemäße Verfahren mit geradegenuteten Bohrern durchzuführen. Es hat sich jedoch gezeigt, dass besonders mit Spiralbohrern gute Ergebnisse erzielt werden. Insbesondere haben Wärmebildaufnahmen bei Spiralwinkeln zwischen 20° und 30° niedrige Temperaturwerte ergeben.

Als Verhältnis der Stegbreiten an der Spitze zu den Stegbreiten am Ende der Spannut ist ein Wert von ca. 1,3 bis 1,7 günstig, beispielsweise 1,5. "Breite des Stegs" bedeutet dabei den Abstand zwischen Schneidenecke und dem äußersten Punkt der nachlaufenden Spanfreifläche in einer auf die Bohrerlängsachse senkrechten Ebene.

Nachfolgend werden anhand schematischer Zeichnungen bevorzugte Ausführungsformen der Erfindung näher erläutert. Es zeigen:
Fig. 1 eine Seitenansicht eines Sinterrohlings für einen Bohrer zum Einsatz in einem Verfahren gemäß einer Ausführungsform der Erfindung;
Fig. 2 einen aus dem in Fig. 1 gezeigten Sinterrohling hergestellten Bohrer
Fig. 3 eine entlang der Linie III - III in Fig. 1 aufgenommene Schnittansicht;
Fig. 4 eine entlang der Linie II - II in Fig. 1 aufgenommene Schnittansicht;
Fig. 5 eine alternative Gestaltung des Spannutprofils im Schnitt III-III;
Fig. 6 ein Diagramm, in dem der Spannutquerschnitt über die Länge des Bohrers bei einem Bohrer zum Einsatz in einem Verfahren gemäß einer Ausführungsform der Erfindung im Vergleich zu einem herkömmlichen Bohrer qualitativ aufgetragen ist;
Fig. 7 eine Stromfadendarstellung der Strömung an der Austrittsöffnung bei dem Bohrer der Fig. 1 unter HSC-Bedingungen bei Mindermengenschmierung;
Fig. 8 eine Stromfadendarstellung der Strömung an der Austrittsöffnung bei einem Bohrer ohne aufgeweitete Spannut unter HSC-Bedingungen bei Mindermengenschmierung;

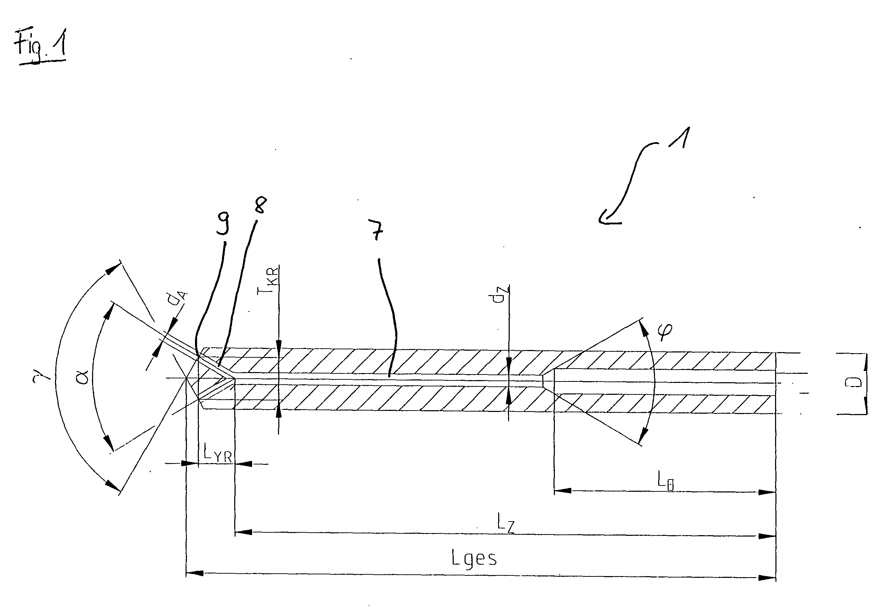

Zunächst wird bezug genommen auf Fig. 1, in der ein Rohling für einen Bohrer 1 gemäß der Erfindung gezeigt ist. Der Spitzenwinkel ist dabei mit y bezeichnet, die Gesamtlänge des Rohlings mmit L_{ges}. Der Rohling mit Durchmesser D weist dabei einen zentrischen Innenkühlkanal 7 auf, der sich nach der Länge L_{Z} Y-förmig in zwei Stichkanäle 8 gabelt, die unter einem Winkel α zu den jeweiligen Austrittsöffnungen 9 hin verlaufen. Der zentrische Innenkühlkanal 7 weist dabei nach der Länge L_{B} eine Stufe auf, so dass ein Schlauch bzw. Röhrchen zur Zufuhr des MMS-Aerosols eingeschoben werden kann. Der zentrische Innenkühlkanal 7 hat nach der Stufe den Durchmesser d_{Z} auf, der größer als ein Durchmesser d_{A} der Stichkanäle 8 ist.

Der Rohling für den Bohrer besteht dabei aus Hartmetall, als Werkstoff wäre jedoch auch ein anderer Sinter-Werkstoff, wie z.B. Keramik, Cermet u.ä denkbar. Dabei können sowohl der zentrische Kühlkanal 7 als auch die Stichkanäle 8 schon in der Vorsinterstufe vor dem Aushärten eingebohrt werden. denkbar wären jedoch auch andere WErkstoffe moderner Hochleistungsbohrer, wie z.B. Schnellarbeitsstähle.

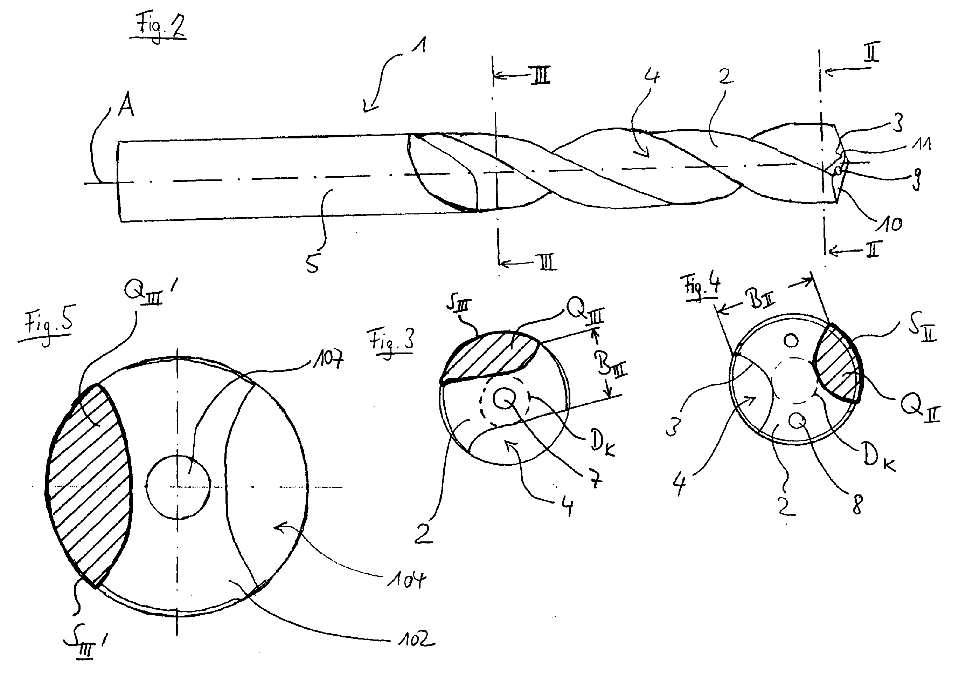

In Fig. 2 ist der aus dem Rohling gefertige Bohrer dargestellt. Er weist zwei Stege 2 auf, die zwei spiralförmig verlaufende, sich im Verlauf zu einem Bohrerschaft 5 hin aufweitende Spannuten 4 einfassen. An den Freiflächen 10 ist jeweils eine Hauptschneide 3 und rückseitig eine Austrittsöffnung 9 der Innenkühlung ausgebildet. Es ist zu erkennen, dass sich die Austrittsöffnung 9 auf der Kante zwischen einer Freifläche 10 und einer Ausspitzung 11 befindet, um einen möglichst großen Anteil des ausströmenden Mediums direkt in die Spannut zu lenken.

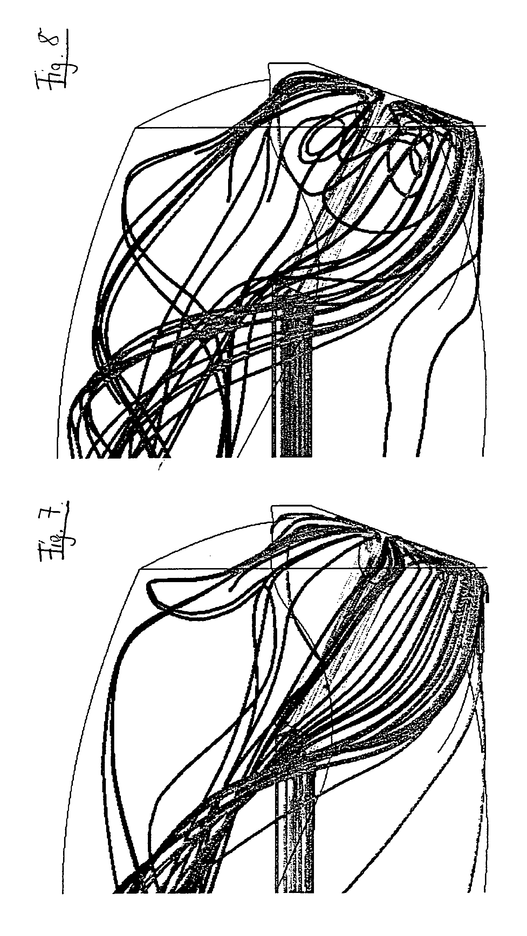

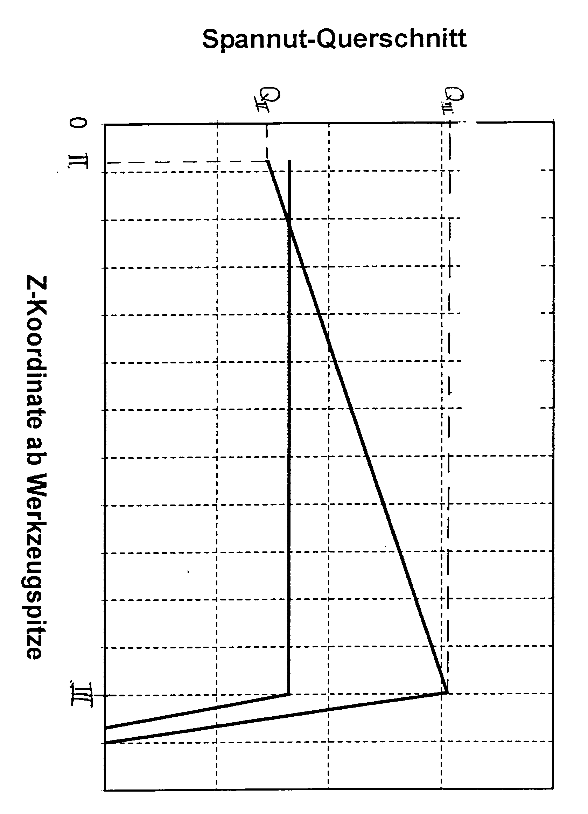

In Fig. 4 ist dabei der Querschnitt Q_{II} der Spannut 4 des Bohrers in der Nähe der Bohrerspitze dargestellt (Linie II-II in Fig. 1), in Fig. 3 der Querschnitt Q_{III} der Spannut 4 im Bereich des entgegengesetzen Endes der Spannut 4 (Linie III-III in Fig. 1). Fig. 5 zeigt eine alternative Ausgestaltung des Bohrers mit einem Querschnitt Q_{III'} der Spannut 104 an der Stelle III-III.

Dabei ist der in Figur 3 und 4 jeweils gestrichelt eingezeichnete Durchmesser D_{K} des Bohrerkerns über die Länge II-III konstant, während die Querschnittsfläche der Spannut 4 vom Querschnitt Q_{II} aus entlang der Axialrichtung koninuierlich zum Querschnitt Q_{III} hin anwächst und die Breite der Stege 2 von B_{II} an der Spitze des Bohrers auf B_{III} am Spannutende abnimmt. Der Bohrer hat somit im rückwärtigen Bereich weniger Fleisch, allerdings nur an den Stegen 2, nicht jedoch am Bohrerkern D_{K}, der für die Stabilität des Bohrers entscheidend ist.

Der Verlauf der Spannutquerschnittsfläche über die Z-Koordinate des Werkzeugs ist auch der Fig. 6 zu entnehmen, in der ein herkömmlicher Bohrer dem zum Einsatz im erfindungsgemäßen Verfanren optimierten Bohrer gegenübergestellt ist. An der Stelle II im Bereich der Werkzeugspitze liegt die Querschnittsfläche Q_{II} der Spannut 4 geringfügig unter der Querschnittsfläche eines herkömmlichen Spiralbohrers gleichen Durchmessers. Über die Werkzeuglänge (mit zunehmender Z-Koordinate) stiegt die Querschnittsfläche dabei kontinuiuerlich und linear an bis auf die Querschnittsfläche Q_{III} an der Stelle III, die deutlich über der konstanten Querschnittsfläche des herkömmlichen Bohrers liegt.

Mit S_{II} bzw. S_{III} ist dabei in den Fig. 3 und 4 jeweils die Einhüllende der durch die Spannutwände und den Bohrungsinnenumfang gebildeten Spannut an den Stellen II und III bezeichnet, also der beim Bohren benetzte Querschnittsumfang. Man erkennt, dass durch den kontinuierlichen Verlauf des Spannutprofils der Anstieg des benetzten Querschnittsumfang nicht überproportional zum Anstieg der Querschnittsfläche ausfällt, so dass keine Massestromanteile der Strömung durch Reibungsverluste aufgrund vergrößerter Reibungsfläche verschenkt werden, d.h. der hydraulische Radius (S/Q) wächst nicht nur unterproportional mit dem Anstieg der Querschnittsfläche. Bei dem Nutprofil gemäß Fig. 5 steht der benetzte Querschnittsumfang S_{III'} in einem noch günstigeren Verhältnis zur eingeschlossenen Querschnittsfläche Q_{III'}.

Reibungsverluste in der Spannut können zusätzlich dadurch verringert werden, dass die Wandrauhigkeit der Spannutwände abgesenkt wird. Dies kann durch ein Nachschleifen der Spannut mit entsprechenden Schleifscheiben bewerkstelligt werden. Andererseits bietet sich aber auch eine glatte Beschichtung, insbesondere im Bereich der Bohrerspitze an, an der eine derartige Beschichtung nicht nur im Bereich der Schneiden, sondern auch im Bereich der Spannut und der Freiflächen aus Gründen eines erhöhten Verschleißwiderstands sinnvoll ist.

Vorteilhaft dafür sind neben einer das Gleiten erleichternden Weichstoffschicht, beispielsweise aus MoS₂, auch glatte Hartstoffschichten, die vorzugsweise dünn ausgeführt sind, wobei die Dicke der Schicht vorzugsweise im Bereich zwischen 0,5 und 3 µm liegt. Für die Hartstoffschicht kommen sämtliche geeigneten Werkstoffe in Frage z.B. Diamant, vorzugsweise nanokristalliner Diamant, Titan-Nitrid- oder Titan-Aluminium-Nitrid. Besonders geeignet sind u.a. eine Titan-Aluminium-Nitrid-Schicht und eine sogenannte Mehrlagen-Schicht, die unter der Bezeichnung "Fire I" von der Firma Gühring oHG vermarktet wird. Dabei handelt es sich um eine TiN-/(Ti,Al)N-Mehrlagen-Schicht.

Besonders bevorzugt kann auch eine Verschleißschutzschicht zur Anwendung kommen, die im wesentlichen aus Nitriden mit den Metallkomponenten Cr, Ti und Al und vorzugsweise einem geringen Anteil von Elementen zur Kornverfeinerung besteht, wobei der Cr-Anteil bei 30 bis 65 %, vorzugsweise 30 bis 60 %, besonders bevorzugt 40 bis 60 %, der Al-Anteil bei 15 bis 35 %, vorzugsweise 17 bis 25 %, und der Ti-Anteil bei 16 bis 40 %, vorzugsweise 16 bis 35 %, besonders bevorzugt 24 bis 35 %, liegt, und zwar jeweils bezogen auf alle Metallatome in der gesamten Schicht. Dabei kann der Schichtaufbau einlagig sein mit einer homogenen Mischphase oder er kann aus mehreren in sich homogenen Lagen bestehen, die abwechselnd einerseits aus (TiₓAl_{y}Y_{z})N mit x = 0,38 bis 0,5 und y = 0,48 bis 0,6 und z = 0 bis 0,04 und andererseits aus CrN bestehen, wobei vorzugsweise die oberste Lage der Verschleißschutzschicht von der CrN-Schicht gebildet ist.

In den Fig. 7 und 8, auf die bereits weiter oben bezug genommen wurde, ist dabei der Strömungsverlauf in der Spannut beim erfindungsgemäßen Zerspanungverfahren unter Einsatz des in den Fig. 2 bis 4 dargestellten Bohrers (Fig. 7) dem Strömungsverlauf in der Spannut beim Zerspanungsverfahren mit gleichen Randwerten unter Einsatz eines konventionellen Bohrers (Fig. 8) gegenübergestellt.

Selbstverständlich sind Abweichungen von den dargestellten Ausführungsformen möglich, ohne den Rahmen der Erfindung zu verlassen.

Die vorliegende Erfindung verkörpert sich somit durch die folgenden Merkmale, und zwar einzeln und in jedweder Kombination:
ein Hochgeschwindigkeitsbearbeitungs (HSC)-Zerspanungsverfahren wird bei Mindermengenschmierung (MMS) durchgeführt;
das Hochgeschwindigkeitsbearbeitungs (HSC)-Zerspanungsverfahren wird unter HSC-Bedingungen durchgeführt;
es wird dazu ein innengekühlter (7, 8, 9) Vollhartmetall-Bohrer (1) verwendet;
mit dem Bohrer (1) wird ins Volle gebohrt;
der Bohrer (1) hat zumindest einen Steg (2; 102) mit einer Hauptschneide (3), von der ausgehend jeweils eine Spannut (4; 104) zu einem Bohrerschaft (5) hin verläuft, die mit der Bohrungswand jeweils eine Spankammer (Q_{II}, Q_{III}; Q_{III}') definiert;
der hydraulische Radius (S_{II}/Q_{II}, S_{III}/Q_{III}; S_{III}'/Q_{III}') der Spankammer (Q_{II}, Q_{III}; Q_{III}') steigt in einer auf die Bohrerlängsachse (A) des Bohrers (1) senkrecht stehenden Ebene von der Hauptschneide (3) aus in Richtung Bohrerschaft (5) bei konstantem Durchmesser (D_{K}) eines Bohrerkerns und unter Aufweitung der Spannut (4; 104) kontinuierlich an;
der Bohrer (1) hat zwei Stege und Spannuten;
ein zentrischer Innenkühlkanal (7; 107) verläuft von einer Bohrerbasis aus in Richtung zu einer Bohrerspitze hin;
der zentrische Innenkühlkanal (7; 107) verzweigt sich Y-förmig in zwei Stichkanäle (8) verzweigt, die jeweils zu einer in der Nähe der Bohrerspitze angeordneten Austrittsöffnung (9) führen;
der Querschnitt (2d_{A}²/4π) beider Stichkanäle (8) ist kleiner gleich dem Querschnitt (d_{Z}²/4π) des zentrischen Innenkühlkanals (7; 107);
die Austrittsöffnung (9) sind am der Hauptschneide (3) gegenüberliegenden Ende der Freifläche (10) angeordnet;
die Austrittsöffnung (9) sind zur Spannut (4) hin angesenkt;
das Profil der Spannut (4; 104) ist stetig gekrümmt;
die Spannuten (4; 104) verlaufen spiralförmig, insbesondere mit einem Spiralwinkel zwischen 10° und 30°, beispielsweise zwischen 20° und 30°.
die Breite (B_{II}) der Stege (2) an der Bohrerspitze steht in etwa im Verhältnis 1,3 bis 1,7, beispielsweise 1,5 zur Breite (B_{III}) der Stege (2) am rückwärtigen Ende der Spannut (4).

## Patentansprüche

1. Hochgeschwindigkeitsbearbeitungs (HSC)-Zerspanungsverfahren wobei bei Mindermengenschmierung (MMS) unter HSC-Bedingungen mit einem innengekühlten (7, 8, 9) Vollhartmetall-Bohrer (1) ins Volle gebohrt wird, der zumindest einen Steg (2; 102) mit einer Hauptschneide (3) aufweist, von der ausgehend jeweils eine Spannut (4; 104) zu einem Bohrerschaft (5) hin verläuft, die mit der Bohrungswand jeweils eine Spankammer (Q_{II}, Q_{III}; Q_{III}') definiert, **dadurch gekennzeichnet, dass** der hydraulische Radius (S_{II}/Q_{II}, S_{III}/Q_{III}; S_{III}'/Q_{III}') der Spankammer (Q_{II}, Q_{III}; Q_{III}') in einer auf die Bohrerlängsachse (A) senkrecht stehenden Ebene von der Hauptschneide (3) aus in Richtung Bohrerschaft (5) bei konstantem Durchmesser (D_{K}) eines Bohrerkerns und unter Aufweitung der Spannut (4; 104) kontinuierlich ansteigt.

2. Verfahren nach Anspruch 1, **dadurch gekennzeichnet, dass** der Bohrer (1) zwei Stege und Spannuten aufweist.

3. Verfahren nach Anspruch 2, **dadurch gekennzeichnet, dass** ein zentrischer Innenkühlkanal (7; 107) von einer Bohrerbasis aus in Richtung zu einer Bohrerspitze hin verläuft, der sich Y-förmig in zwei Stichkanäle (8) verzweigt, die jeweils zu einer in der Nähe der Bohrerspitze angeordneten Austrittsöffnung (9) führen, wobei der Querschnitt (2d_{A}²/4π) beider Stichkanäle (8) kleiner gleich dem Querschnitt (d_{Z}²/4π) des zentrischen Innenkühlkanals (7; 107) ist.

4. Verfahren nach Anspruch 2 oder 3, **dadurch gekennzeichnet, dass** die Austrittsöffnung (9) am der Hauptschneide (3) gegenüberliegenden Ende der Freifläche (10) angeordnet ist und zur Spannut (4) hin angesenkt ist.

5. Verfahren nach einem der vorhergehenden Ansprüche, **dadurch gekennzeichnet, dass** das Profil der Spannut (4; 104) stetig gekrümmt ist.

6. Verfahren nach einem der vorhergehenden Ansprüche, **dadurch gekennzeichnet, dass** die Spannuten (4; 104) spiralförmig verlaufen, insbesondere mit einem Spiralwinkel zwischen 10° und 30°, beispielsweise zwischen 20° und 30°.

7. Verfahren nach einem der vorhergehenden Ansprüche, **dadurch gekennzeichnet, dass** die Breite (B_{II}) der Stege (2) an der Bohrerspitze in etwa im Verhältnis 1,3 bis 1,7, beispielsweise 1,5 zur Breite (B_{III}) der Stege (2) am rückwärtigen Ende der Spannut (4) steht.
